**Europäisches Patentamt**

**European Patent Office**

**Office européen des brevets**

(19)

(11) Veröffentlichungsnummer: **0 029 238**
**B1**

(12)

# EUROPÄISCHE PATENTSCHRIFT

(45) Veröffentlichungstag der Patentschrift:
**13.04.83**

(21) Anmeldenummer: **80107083.0**

(22) Anmeldetag: **15.11.80**

(51) Int. Cl.³: **G 02 B 21/26,** G 02 B 21/34

(54) Objekthaltersystem für aufrechte Mikroskope.

(30) Priorität: **17.11.79 DE 2946544**

(43) Veröffentlichungstag der Anmeldung:
**27.05.81 Patentblatt 81/21**

(45) Bekanntmachung des Hinweises auf die Patenterteilung:
**13.04.83 Patentblatt 83/15**

(84) Benannte Vertragsstaaten:
**AT CH GB LI**

(56) Entgegenhaltungen:
**DE-C-642 659**
**FR-A-2 300 349**
**JP-A-53 052 139**
**US-A-3 549 232**
**US-A-3 738 730**
**US-A-3 848 962**
**Japan Patent Abstracts, Seite 3947E78**

(73) Patentinhaber: **Firma Carl Zeiss, Postfach 1369/1380,**
**D-7082 Oberkochen (DE)**

(72) Erfinder: **Weber, Klaus, Dr., Baumgartenweg 22,**
**D-7923 Königsbronn (DE)**

BUNDESDRUCKEREI BERLIN

## Objekthaltersystem für aufrechte Mikroskope

Die Erfindung betrifft ein Objekthaltersystem für aufrechte Mikroskope.

Die zur Zeit verwendeten aufrechten Mikroskope besitzen einen Tisch, auf dessen Oberfläche das zu untersuchende Objekt aufgelegt wird, und der im allgemeinen zum Zwecke der Fokussierung in Richtung der optischen Achse verschiebbar ist. Dazu werden zwei separate Getriebe, ein sog. Grobtrieb und ein sog. Feintrieb benötigt, um einmal die Fokusebene an die stark unterschiedlichen Objektabmessungen anzupassen und zum anderen eine feinfühlige Fokussierung im Bereich hoher Vergrößerungen zu ermöglichen.

Da Grob- und Feintrieb koaxial ausgeführt werden, ist diese Fokussiermechanik relativ aufwendig in der Herstellung, insbesondere wenn auf eine hohe Stabilität des Tisches Wert gelegt wird. Manipulationen am Objekt bzw. Verschiebungen des Objekts beim Durchmustern sollen möglichst kein Auswandern des Objekts aus der Fokusebene des Mikroskops verursachen.

In inversen Mikroskopen werden die zu untersuchenden Objekte auf einen meist festen Tisch gelegt, so daß die Objektoberfläche bei Auflicht-Proben stets in die Fokusebene des Mikroskops fällt. Für geringe Fokussierhübe wird lediglich ein Feintrieb benötigt, mit dem dann der Objektivrevolver in der Höhe verstellt wird.

Nachteilig ist dabei, daß der Benutzer die gerade untersuchte Objektoberfläche nicht direkt beobachten kann, was z. B. beim Aufsuchen interessanter Probenbereichen sehr nützlich ist. Beim Arbeiten mit Ölimmersion muß das Öl auf die nach unten liegenden Präparatseite des Objektträgers aufgebracht werden und läuft so beim Absuchen des Objekts leicht in die Mechanik des Präparatschutzes des Objektivs.

Das bei inversen Mikroskopen bekannte Fokussieren durch Verstellen des Objektivrevolvers kann auf aufrechte Mikroskope nicht ohne weiteres übertragen werden, da größere Fokussierhübe, wie sie benötigt werden, um Objekte unterschiedlicher Abmessungen untersuchen zu können, die Verwendung eines speziellen Objektivsystems voraussetzen. Mit den bisher weit verbreiteten Objektiven, die für eine endliche Tubuslänge gerechnet sind, lassen sich nur geringe Fokussierhübe durchführen, ohne die Qualität des Zwischenbildes negativ zu beeinflussen.

Aus der DE-PS 2 449 291 ist eine Vorrichtung zum Anbringen von Objektträgern an Mikroskopen bekannt; die aus einem festen Tisch besteht, an dessen Unterkante standardisierte Durchlicht-Objektträger mit Hilfe einer Ansaugeeinheit angelegt werden können, wodurch die Objektebenen der Proben stets mit der Fokusebene des verwendeten Mikroskops übereinstimmen. Abgesehen davon, daß diese Vorrichtung eine Vakuumleitung benötigt, die bei einfachen Mikroskopen nicht zur Verfügung steht, können in diese Vorrichtung auch keine anderen Proben z. B. Auflicht-Objekte mit abweichenden Abmessungen aufgenommen werden. Selbst die Untersuchungen von Blutzählkammern, die im klinischen Betrieb häufig im Wechsel mit Standard-Objektträgern betrachtet werden, können auf dieser Vorrichtung nicht durchgeführt werden, da normale Blutzählkammern in allen Abmessungen (Dicke, Deckglasdicke, Breite, Länge) von den entsprechenden Werten für Standard-Objektträger abweichen.

Aus dem DE-GM 1 973 676 ist ein sog. Anschlifftisch für Auflicht-Objekte bekannt, der auf den eigentlichen Tisch eines aufrechten Mikroskops aufgesetzt wird, und in dem unterschiedlich dicke Objekte jeweils mit Federkraft gegen die Unterseite einer Ringblende gedrückt werden. Mit derartigen Anschlifftischen wird die Objektebene um einen konstanten Betrag, nämlich die Höhe des Anschlifftisches nach oben verlegt und bleibt für alle innerhalb der Anschlifftischhöhe variierenden Objekte gleich. Allerdings ist die Verwendung dieses Anschlifftisches nur an Mikroskopen möglich, die einen Grobtrieb oder eine andere Tischverstellung besitzen, mit dem die Fokusebene des Mikroskops um den der durch die Höhe des Anschlifftisches bedingten Verschiebung der Objektebene entsprechenden Betrag nachgestellt werden kann.

Es ist die Aufgabe der vorliegenden Erfindung, ein Objekthaltersystem für aufrechte Mikroskope zu schaffen, mit dessen Hilfe eine Vielzahl von Objekten mit unterschiedlichen Abmessungen auf einem Mikroskop untersucht werden kann, ohne daß beim Probenwechsel eine Defokussierung eintritt.

Diese Aufgabe wird gemäß dem kennzeichnenden Teil des Anspruchs 1 dadurch gelöst, daß zu jeder Serie von Proben unterschiedlicher Abmessungen spezielle, in die gleiche Aufnahme im Tisch passenden Objekthalter vorgesehen sind, bei denen die Probenoberflächen stets den gleichen, dem Abstand der Schärfenebene des Mikroskops zur Anlagefläche entsprechenden, effektiven Abstand von der Anlagefläche der Objekthalter besitzen.

Mit einem solchen Objekthaltersystem wird zum einen der Grobtrieb des zur Untersuchung benutzten Mikroskops entbehrlich, daß heißt statt einer aufwendig konstruierten und teuren Fokussiermechanik werden mehrere auf die Objekte abgestimmte Halter verwendet. Vor allem aber ist nach einem Objektwechsel das Bild des nächsten Präparates selbst bei Präparaten unterschiedlicher Dicke sofort sichtbar. Nach dem Einlegen des Halters kann sich der Benutzer also auf wenige, verbleibende Handgriffe bei der Untersuchung beschränken und ist nicht zu einem zeitraubenden Aufsuchen der Schärfenebene mittels Grob- und Feintrieb genötigt.

Speziell für den klinischen Bereich ist es zweckmäßig, Halter für Blutzählkammern vorzusehen, in die diese so eingekittet werden, daß die effektive Objektebene mit der Oberkante des Halters übereinstimmt. Dieser besitzt die gleichen Außenabmessungen wie Standard-Objektträger und wird wie diese an eine z. B. in der Fokusebene des Mikroskops liegende Tischunterkante angelegt. Dabei ist zu berücksichtigen, daß die größere Dicke von Deckgläsern für Blutzählkammern (0,3 mm) gegenüber der von Deckgläsern für Standard-Objektträger (0,17 mm) bereits ausreicht, um eine Defokussierung des Bildes bei Betrachtung durch Objektive mit großem Abbildungsmaßstab hervorrufen. Die reale Objektebene sollte also um die gemäß der Brechzahldifferenz zwischen dem Deckglas und Luft korrigierte Differenz der Deckglasdikken

$$(0,3\,mm - 0,17\,mm) \cdot \frac{1,51 - 1}{1,51} = 0,043\,mm$$

unter der Objekthalteroberfläche liegen. Der effektive Abstand zwischen der Probenoberfläche und der Anlagefläche der Objekthalter ist also der Abstand zwischen der Schärfenebene und der Anlagefläche in der Aufnahme vermindert um den Betrag, um den sich die optische Weglänge zwischen Probe und Objektiv durch auf die Probe aufgelegte Glasplatte verkürzt.

Durch das Anlegen an eine in der Fokusebene liegende Tischunterkante sind Schwankungen in der Objektträgerdicke — gängige Objektträger sind zwischen 0,9 und 1,3 mm dick, Blutzählkammern sind 3 bis 6 mm dick — ohne Einfluß auf die Bildschärfe. Beschädigungen des Objektivs oder des Objektträgers, die beim Einschieben nach herkömmlicher Art auf den Mikroskoptisch aufgelegter, dickerer Objektträger oder beim anschließenden Aufsuchen der Schärfenebene mittels Grobtrieb möglich waren und nur durch einen aufwendigen Präparatschutz in Form einer federnden Objektivfassung vermieden werden konnten, sind beim erfindungsgemäßen Objekthaltersystem ausgeschlossen. Dickendifferenzen der Objektträger machen sich lediglich indirekt auf der Beleuchtungsseite bemerkbar. Während aber beim herkömmlichen Auflegen des Objektträgers auf den Mikroskoptisch Dickendifferenzen der Objektträger eine Defokussierung der Leuchtfeldblende verursachen, die z. B. nach dem Auflegen einer 3 mm dicken Blutzählkammer um ca. 2 mm unter der Objektebene liegt und eventuell ein Nachjustieren erforderlich macht, wird bei Verwendung von Haltern, in denen die Oberflächen der Blutzählkammern »im Fokus« gehalten werden, die Leuchtfeldblende entsprechend der Brechzahldifferenz zwischen Glas und Luft lediglich um etwa ein Drittel des Betrages (0,65 mm) defokussiert. Der um 2 mm geringere Abstand zum Kondensor stört bei Kondensoren mit langer Schnittweite nicht.

Eine völlige Beseitigung aller Aberrationen im Beleuchtungsstrahlengang kann erreicht werden, wenn in Verbindung mit dem erfindungsgemäßen Objekthaltersystem ein Kondensor benutzt wird, der eine objektseitig angeordnete, abnehmbare, planparallele Platte enthält, die in den Korrektionszustand des Kondensators eingerechnet ist, und deren Stärke der Dickendifferenz zwischen Standard-Objektträger und Blutzählkammer entspricht (2 mm). Sollen Blutzählkammern beobachtet werden, so wird diese Platte vom Kondensor entfernt und für den Beleuchtungsstrahlengang nicht unterscheidbar durch die größere Dicke der Blutzählkammer ersetzt. Gleichzeitig werden damit die Probleme eines zu geringen Arbeitsabstandes zwischen Kondensor und Blutzählkammer vermieden.

Es ist vorteilhaft, zur Erleichterung der Zuführung der Objektträger einen waagerecht verschiebbar in der Aufnahme des Tisches geführten Aufnahmerahmen vorzusehen. In diesen können die Objektträger bzw. die in Objekthalter eingekitteten Blutzählkammern eingelegt werden und danach durch Einschieben des Rahmens in den gabelförmigen Tisch positioniert werden. Der Tisch besitzt Federn, die so ausgebildet sind, daß der Aufnahmerahmen beim Einschieben mit zunehmender Kraft mit dem Objektträger gegen die Tischunterkante gedrückt wird. Dadurch wird ein Verkanten bzw. Klemmen beim Einführen der im allgemeinen recht scharfkantigen Objektträger vermieden.

Der Tisch, der die Aufnahme für die Objektträger bzw. Objekthalter enthält, kann als Kreuztisch oder Gleittisch ausgebildet sein, um ein Durchmustern der Präparate zu ermöglichen.

Mit einem System bestehend aus Objekthaltern, in die Durchlichtobjekte oberflächenschlüssig eingefaßt sind, und entsprechenden Aufnahmen im Tisch, kann ein auch ohne Grobtrieb arbeitendes Mikroskop wie vorstehend beschrieben im klinischen Bereich für Untersuchungen unterschiedlicher Objekte benutzt werden. Objekthalter, die die Objektoberfläche stets in der Fokusebene des Mikroskops legen, sind jedoch nicht auf diesen Anwendungsfall beschränkt:

Oft werden mikroskopische Objekte untersucht, deren Abmessungen innerhalb einer Vielzahl von Objekten stets konstant bleiben, und die sich nur von Serie zu Serie unterscheiden. Als Beispiel seien Siliziumscheiben (Wafer) und Masken für die Belichtung bestimmter Strukturen auf diesen Scheiben in der Elektronikindustrie genannt. Die unterschiedliche Dicke von Masken und Wafern bzw. der Wafer und Masken verschiedener Serien bedingt stets ein Nachfokussieren beim Wechsel der Untersuchungsobjekte. Die Probenzuführung ist problematisch, da beim geringen Arbeitsabstand zwischen Objektiv und Objekt die versehentliche Zuführung eines dickeren Objekts eine Beschädigung von Objektiv bzw. Objekt bewirken kann.

Hier ist es vorteilhaft verschiedene Schieberahmen vorzusehen, deren Tiefe jeweils den hochgenau eingehaltenen Normdicken der Objekte der jeweiligen Serie entsprechen. Nach dem Einlegen der Objekte werden die Rahmen in den Mikroskoptisch eingeschoben und wie bereits beschrieben an eine in der Fokusebene des Mikroskops liegende Tischunterkante angelegt. Damit wird ein Verkratzen der Randbereiche der Objektoberfläche vermieden, ein bei der Untersuchung von Wafern wichtiger Faktor.

Zweckmäßig ist es auch für Objekte variabler, nicht vorhersehbarer Dicke als Objekthalter einen Rahmen variabler Tiefe zu verwenden. Dieser kann aus zwei im Reibschluß gegeneinander verschiebbaren Teilen bestehen, von denen der obere eine zur Tischanlage bestimmte Kante besitzt und der unter das Objekt trägt. Die Auflichtobjekte können in inelastisches Material am Boden der Aufnahmerahmen eingepreßt werden, indem sie mit dem Rahmen gegen eine ebene Fläche gedrückt werden. Die Tiefe des Rahmens wird dabei solange verringert, bis das Objekt in das inelastische Material eingedrückt ist. Danach stimmt die Objektoberfläche mit der Oberkante des Rahmens überein. Der Rahmen ist dann in bekannter Weise zur Anlage unter eine Tischkante in der Fokusebene des verwendeten Mikroskops bestimmt.

Vorteilhaft ist auch für Auflichtobjekte unterschiedlicher Dicke einen einseitig offenen Aufnahmebehälter vorzusehen, in dem das Objekt mit Federkraft gegen die Unterseite einer Blende gedrückt wird. Diese ist so im Behälter angeordnet, daß die Objektoberfläche stets in die Fokusebene des Mikroskops fällt, was durch geeignete Wahl des Abstandes zwischen Blende und Tischanlagefläche des Aufnahmebehälters immer möglich ist. Bei wechselseitiger Verwendung mit den vorstehend beschriebenen Schieberahmen fester und variabler Tiefe liegen Tischanlagefläche und Blendenunterkante in einer Ebene. Mit einem derartigen Aufnahmebehälter nach Art bekannter Anschlifftische erfolgt im Gegensatz zu diesen jedoch keine Verlagerung der Objektoberfläche, da der Aufnahmebehälter in den Tisch eingehängt und nicht auf den Tisch gesetzt ist, d. h. auch hier ist eine Grobverstellung des Mikroskoptisches nicht erforderlich, wenn von einer Art der Objekthalterung auf die andere übergegangen werden soll.

Ein zur Aufnahme der Durchlicht-Objektträger und Halter für Blutzählkammern, bzw. Schieberahmen und Aufnahmebehälter geeigneter Tisch ist zweckmäßig einseitig geöffnet und erlaubt ein waagerechtes Zuführen der Objekthalter in die so gebildete gabelförmige Aufnahme. Der Tisch enthält weiterhin Federn, mit denen die Objekthalter gegen eine in der Fokusebene des Mikroskops, an dem der Tisch befestigt ist, liegende Unterkante angelegt werden.

Die Breite der Gabel 1 ist dem Anwendungsfall angepaßt. Natürlich ist es nicht möglich Standard-Durchlicht-Objektträger an Tische anzulegen, die für die Schieberahmen zur Aufnahme von 4-Zoll-Wafern ausgelegt sind. Dies bedeutet jedoch keine Einschränkung für den Benutzer, da z. B. ein Kliniker nicht mit Wafern arbeitet und in der Elektronikindustrie keine Blutuntersuchungen vorgenommen werden. Es genügt also vollauf Tische für bestimmte Anwendungsgebiete in ihren Abmessungen so auszulegen, daß in die Aufnahme eine Vielzahl von innerhalb des Anwendungsgebietes in der Regel zu untersuchenden Objekten mit den entsprechenden Haltern eingelegt werden kann. Die zur Aufnahme der Objekthalter bestimmten Tische können als Kreuztische oder Gleittische ausgebildet werden um ein Durchmustern des Objekts zu ermöglichen.

Speziell für Auflichtobjekte erweist es sich jedoch als zweckmäßig statt eines verschiebbaren Tisches einen feststehenden Tisch mit einer gabelförmigen Aufnahme vorzusehen, auf die die entsprechenden Objekthalter aufgelegt werden. Die Objekthalter besitzen einen die Gabel überdeckenden, ebenen oberen Teil und im Bereich zwischen der Gabel geringere Abmessungen, die etwa der halben Gabelbreite entsprechen. Diese Objekthalter können auf der Gabel zum Durchmustern verschoben werden. Ein separater Kreuz- oder Gleittisch wird also nicht benötigt. Um Untersuchungen des Objekts im polarisierten Licht zu ermöglichen, kann die Gabel um die optische Achse drehbar gelagert sein.

Ausführungsbeispiele der vorliegenden Erfindung werden anhand der beigefügten Zeichnungen näher erläutert:

Fig. 1 skizziert die Halterung eines gebräuchlichen Durchlicht-Objektträgers;

Fig. 2 skizziert die Halterung einer Blutzählkammer;

Fig. 3 skizziert die Halterung eines Durchlicht-Objektträgers in einem Einlegerahmen;

Fig. 4 und 5 skizzieren die Halterung von Wafern bzw. Masken mittels spezieller Schieberahmen;

Fig. 6 und 7 skizzieren die Halterung von Auflicht-Schliffpräparaten unterschiedlicher Dicken und Durchmesser;

Fig. 8 skizziert einen auf einem drehbaren, gabelförmigen Tisch waagerecht verschiebbaren Objekthalter;

Fig. 9 zeigt einen Gleittisch für Durchlicht-Objektträger.

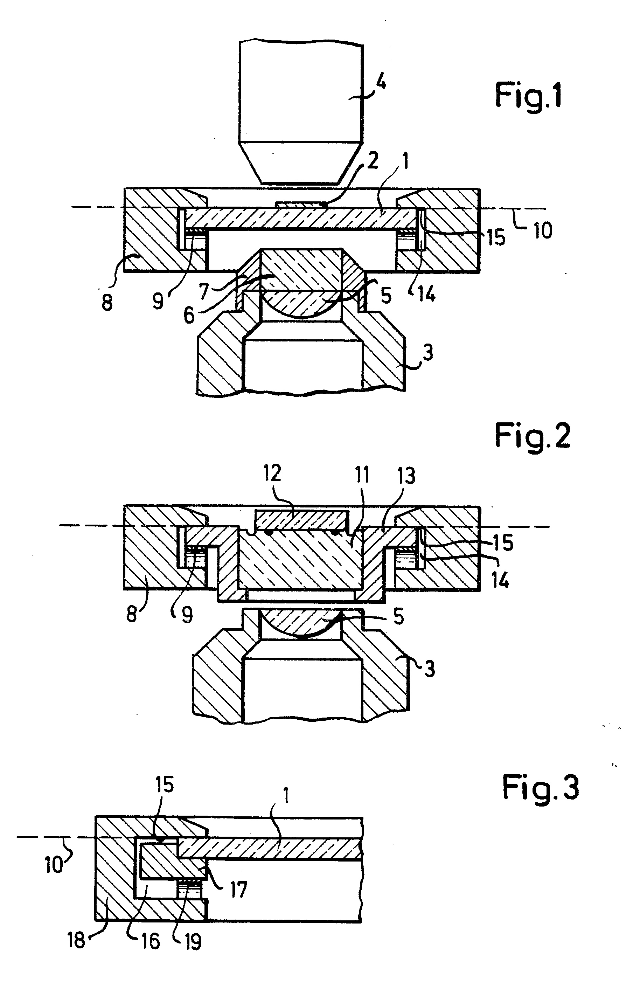

In Fig. 1 ist ein mit einem Deckglas 2 versehener gebräuchlicher Durchlicht-Objektträger 1 dargestellt, der über einen Kondensator 3 beleuchtet und mit Hilfe eines Objektivs 4 abgebildet bzw. beobachtet wird. Die Oberfläche des Objektträgers 1 wird durch die Aufnahme 8 im Tisch des Mikroskops stets in der Fokusebene 10 des Objektivs 4 gehalten. Dazu besitzt die Aufnahme 8 zwei waagerecht verlaufende Nuten 14, in denen je eine Blattfeder 9 angeordnet ist, die den waagerecht eingeschobenen Objektträger 1 an die in der Fokusebene 10 liegende, durch die Nuten 14 gebildete Unterkanten 15 anlegen.

Die Frontlinse des Kondensors 3 besteht aus 2 Teilen 5 und 6, von denen der planparallele, in eine Kappe 7 eingefaßte Teil 6 abnehmbar ist.

Die Stärke der Planplatte 6 entspricht der Dickendifferenz zwischen einem Standard-Objektträger 1 und einer Blutzählkammer 11, wie sie in Fig. 2 dargestellt ist. Die Blutzählkammer 11 ist in einem Objekthalter 13, dessen Außenmaße mit denen des Objektträgers 1 übereinstimmen, so eingekittet, daß unter Berücksichtigung des im Vergleich zum Deckglas 2 stärkeren Deckglases 12 die effektive Objektebene mit der Oberkante des Objekthalters 13 übereinstimmt (vgl. Seite 3 unten). Der die Blutzählkammer 11 tragende Objekthalter 13 ist ebenso wie der Objektträger 1 in die Nuten 14 der Aufnahme 8 eingeschoben und durch die Federn 9 »im Fokus« gehalten. Die Kappe 7 des Kondensors 3 und somit die Planplatte 6 sind entfernt, so daß auch für den Beleuchtungsstrahlengang im Vergleich zu Fig. 1 keine Änderung eingetreten ist.

Der in Fig. 3 skizzierte Teil der Aufnahme 18 für Objektträger 1 oder Blutzählkammer besitzt eine im Vergleich zur Aufnahme 8 tiefere Nut 16, in der ein Einlegerahmen 17 verschiebbar ist. Der Rahmen 17 kann soweit aus der Aufnahme 18 herausgezogen werden, daß der Objektträger 1 von oben in den Rahmen 17 eingelegt werden kann. Beim Einschieben drückt die Blattfeder 19 den Rahmen 17 nach oben und damit den Objektträger 1 gegen die in der Fokusebene 10 liegende Tischunterkante 15.

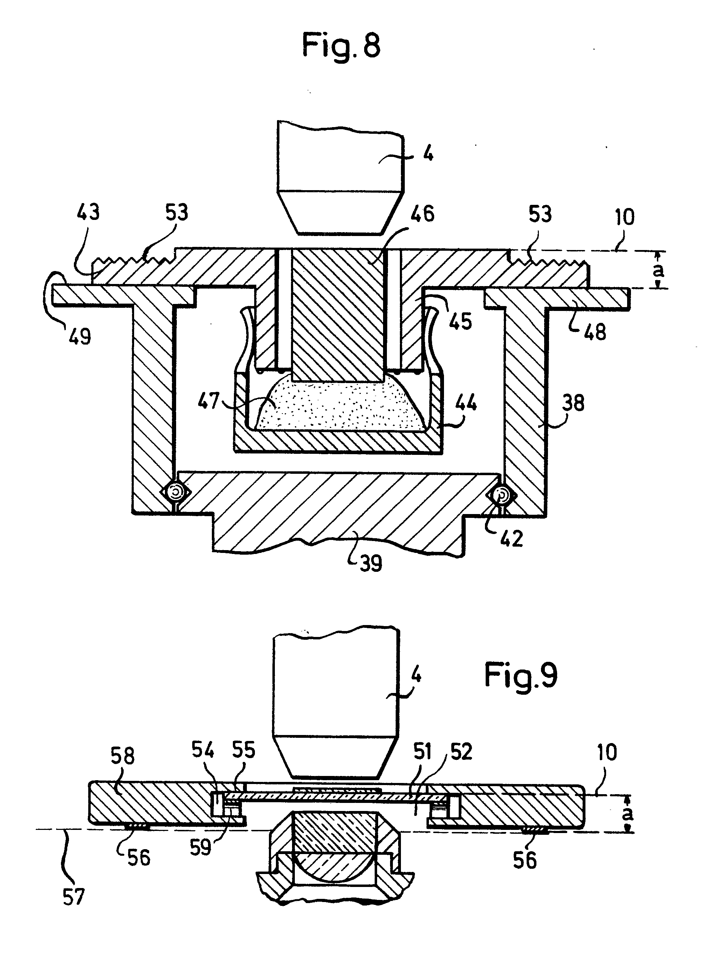

Fig. 9 zeigt einen Gleittisch 58, der zur Aufnahme von Durchlicht-Objektträgern 51 bzw. eingekitteten Blutzählkammern geeignet ist. Diese werden wie anhand der Fig. 1—3 bereits beschrieben von Federn 59 jeweils an die Unterkante 55 einer Nut 54 angelegt. Der Gleittisch 58 ruht auf vier Teflonfüßen 56, mit denen er auf die Oberfläche eines mit einem Mikroskop fest verbundenen, ebenen Tisches gestellt und darauf zum Durchmustern des Objektträgers 51 verschoben werden kann. Die Oberfläche des festen Tisches befindet sich im Abstand a unter der Schärfenebene des betreffenden Mikroskops und der Gleittisch 58 ist so bemessen, daß die Kante 55 im gleichen Abstand a über der Unterseite der Füße 56 liegt. Somit befinden sich die Oberflächen der verwendeten Objektträger stets in der Fokusebene des Mikroskops. Der Gleittisch 58 besitzt weiterhin unterhalb der Anlagefläche 55 eine durchgehende Ausnehmung 52, die ein waagerechtes Zuführen des Gleittisches 58 trotz des über die Auflagefläche 57 hinausragenden Kondensators 3 erlaubt. Somit kann der Tisch 58 ausgewechselt werden, ohne daß die Objektive 4 abgenommen werden müssen.

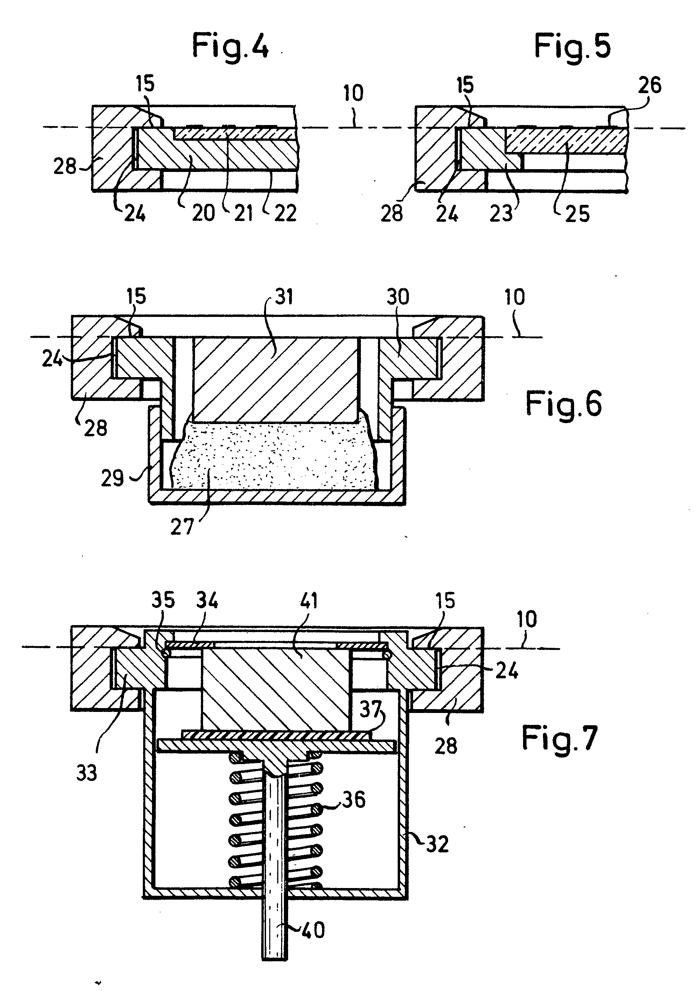

Die in Fig. 4—7 dargestellten Objekthalter bilden ein Einschubsystem zur Aufnahme unterschiedlich geformter Festkörper für vorzugsweise Auflichtbetrachtung. In Fig. 4 ist eine Siliziumscheibe (Wafer) 21 dargestellt, deren Oberfläche 22 betrachtet werden soll. Als Objekthalter dient ein Schieberahmen 20, dessen Ausfräsung der Dicke der Scheibe 21 entspricht. Zur Aufnahme von Wafern 21 aus Serien mit unterschiedlichen Abmessungen sind jeweils entsprechende Schieberahmen vorgesehen, die sich in Nuten 24 einer gabelförmigen Aufnahme 28 einführen lassen, die mit dem Tisch des Mikroskops verbunden ist.

Fig. 5 zeigt einen Objekthalter 23 für eine Maske 25, die zur Belichtung der mit Fotolack überzogenen Oberfläche 22 des Wafers 21 verwendet werden kann. Die Struktur 26 der Maske 25 kann im Auflicht und im Durchlicht betrachtet werden, da der Rahmen 23 im Gegensatz zum Rahmen 20 keinen durchgehenden Boden besitzt. Auch hier sind für Masken verschiedener Stärken und Abmessungen jeweils entsprechende Objekthalter in Form von Schieberahmen vorgesehen.

Fig. 6 zeigt einen Objekthalter für Anschliff-Präparate, dessen Teile 29 und 30 im Reibschluß gegeneinander verschiebbar sind. Im behälterförmigen Teil 29 des Halters befindet sich eine inelastische Masse 27, in die das Objekt 31 eingedrückt wird. Bei diesem Vorgang werden die Oberkante des Halters 30 und die zu untersuchende Objektoberfläche gemeinsam an eine ebene Fläche angelegt. Bei geeigneter Dimensionierung der Teile 29 und 30 können auch Objekte stark streuender Dicke mit der Oberkante des Probenhalters bündig eingefaßt werden, so daß ihre Oberfläche nach dem Einschieben des Halters 29, 30 in die Aufnahme 28 mit der Fokusebene 10 übereinstimmt.

In ähnlicher Weise wird dies durch einen einseitig offenen Aufnahmebehälter 32 erreicht, in dem das Objekt 41 über die Feder 36 und den Stempel 40 gegen eine Blende 34 gedrückt wird, die mit einem Klemmring 35 gesichert ist (Fig. 7). Der Aufnahmebehälter besitzt außen 2 Stege 33, mit denen er in den Nuten 24 der Aufnahme 28 gehalten wird. Die Oberkanten der Stege 33 liegen in der gleichen Ebene wie die Unterkante der Blende 34, so daß die Oberfläche des Objekts 41 in der Fokusebene 10 liegt. Da der Behälter 32 einseitig geöffnet ist, kann er beim Objektwechsel seine Position gegenüber der Aufnahme 28 im Tisch des Mikroskops beibehalten.

Die zum Einführen in die Nut 24 der Aufnahme 28 geeigneten Teile der in Fig. 4—7 dargestellten Objekthalter besitzen alle gleiche Abmessungen, sind somit gegeneinander austauschbar und erlauben das Betrachten von Objekten unterschiedlicher Abmessungen unter Beibehaltung der Fokusebene des mit der Aufnahme 28 verbundenen Mikroskops.

Der Tisch, der die Aufnahme 28 trägt, kann als Kreuztisch ausgelegt sein, um ein Durchmustern der Proben zu ermöglichen. Es ist aber auch möglich einen festen oder wie in Fig. 8 dargestellt, um die optische Achse drehbaren Tisch zu benutzen, und die Objekthalter so auszubilden, daß sie auf dem Tisch zum Durchmustern verschoben werden können, ohne daß nach einem Objektwechsel die Probenoberfläche aus der Fokusebene fällt:

Dazu wird ein Tisch benutzt, der eine gabelförmige Aufnahme 48 besitzt, die auf einem zur Gabelöffnung hin offenen Zylinder 38 ruht. Dieser ist über ein Kugellager 42 gegenüber seinem fest mit dem Mikroskop verbundenen Boden 39 um die optische Achse des Objektivs 4 drehbar gelagert.

Objekte 46 können wie bereits in Fig. 5 beschrieben in einem Objekthalter variabler Tiefe, der aus einer geschlitzten Schiebehülse 44 und dem zylindrischen Gegenstück 45 besteht, mit Hilfe von inelastischem Material gefaßt werden. Der Durchmesser des Objekthalters 44, 45 entspricht etwa der halben Breite der Gabelöffnung der Aufnahme 48.

Der zylindrische Teil 45 des Objekthalters ist in eine rechteckige Platte 43 eingefaßt, deren Dicke a dem Abstand der Fokusebene 10 von der Oberfläche 49 der Aufnahme 48 entspricht. Die Platte 43 trägt eine Riffelung 53, mit der sie und damit das Objekt 46 von Hand in der Fokusebene 10 verschoben werden kann.

## Patentansprüche

1. Objekthaltersystem für aufrechte Mikroskope mit einem Tisch, der eine mit der Schärfenebene des Mikroskops direkt korrelierte Fläche zur Anlage von Objekthaltern besitzt, dadurch gekennzeichnet, daß zu jeder Serie von Proben (1, 11, 21, 25, 31, 41, 46, 51) unterschiedlicher Abmessungen spezielle, in die gleiche Aufnahme (8; 18; 28; 38; 48; 54) im Tisch passende Objekthalter (13; 20; 23; 29; 30; 32; 44; 45) vorgesehen sind, bei denen die Probenoberflächen stets den gleichen, dem Abstand der Schärfenebene (10) des Mikroskops zur Anlagefläche (15, 49, 55) entsprechenden, effektiven Abstand (0, a) von der Anlagefläche der Objekthalter besitzen.

2. Objekthaltersystem nach Anspruch 1, gekennzeichnet durch eine mit dem Tisch verbundene Aufnahme (8, 18, 54), die eine in der Schärfenebene (10) des Mikroskops liegenden Unterkante (15, 55) zur wahlweisen Anlage von Standard-Durchlichtobjektträgern (1) besitzt, und von Haltern (13) für Blutzählkammern (11), in die die Kammern (11) so eingekittet sind, daß die Objektebene mit der Oberkante des Halters (13) unter Berücksichtigung der im Vergleich zu Standard-Objektträgern (1) größeren Deckglasdicke (12) der Kammern (11) übereinstimmt.

3. Objekthaltersystem nach Anspruch 2, gekennzeichnet durch einen in der Aufnahme (18) längs der Anlagekante (15) verschiebbar befestigten Einlegerahmen (17) der Standard-Durchlichtobjektträger (1) und Halter (13) von Blutzählkammern (11) sowie Federmittel (19), die den Rahmen (17) beim Einschieben in die Aufnahme (18) in Richtung auf die Unterkante (15) belasten, so daß die eingelegte, über die Oberkante des Rahmens (17) hinausragende Oberfläche des Objektträgers (1) mit dieser Kante (15) zur Anlage kommt.

4. Objekthaltersystem nach Anspruch 1, dadurch gekennzeichnet, daß als Objekthalter für verschiedene Serien unterschiedlich dicker, innerhalb der Serie genau maßhaltiger Objekte (21, 25) mehrere Schieberahmen (20, 23) vorgesehen sind, deren Tiefe jeweils den Normdicken der Serien angepaßt ist.

5. Objekthaltersystem nach Anspruch 4, gekennzeichnet durch Schieberahmen (30) mit Aufnahmebehältern (29), deren Böden durch Reibschluß in der Höhe verstellbar sind.

6. Objekthaltersystem nach Anspruch 5, dadurch gekennzeichnet, daß die Aufnahmebehälter (29) inelastisches Material (27) zum Einspressen von Auflichtobjekten (31) enthalten.

7. Objekthaltersystem nach Anspruch 4, gekennzeichnet durch einen zusätzlichen, einseitig offenen Aufnahmebehälter (32) für Auflichtobjekte, in dem das Objekt (41) mit Federkraft (36) gegen die Unterkante einer Blende (34) gedrückt wird, deren Abstand zur Tisch-Anlagefläche des Behälters (32) der Differenz zwischen der Tiefe der Schieberrahmen (20, 23) und der Dicke der darin gehaltenen Objektive (21, 25) entspricht.

8. Objekthaltersystem nach Anspruch 4—7, dadurch gekennzeichnet, daß der Tisch eine Aufnahme (28) für die Objekthalter (20, 23, 30, 32) in Form einer einseitig geöffneten Gabel besitzt und Federmittel vorgesehen sind, die beim Einschieben des Objekthalters (20, 23, 32, 30) in eine die Anlagefläche (15) der Aufnahme (28) bildende Nut (24) den Halter (20, 23, 30, 32) gegen diese Fläche (15) drücken.

9. Objekthaltersystem nach Anspruch 1, gekennzeichnet durch eine gabelförmige Aufnahme (48, 38), deren Oberfläche (49) unterhalb der Fokusebene (10) des Mikroskops liegt, und direkt auf die gabelförmige Aufnahme (38, 48) aufzulegende Objekthalter (44, 45) für Auflicht-Proben (46), die die Probenoberfläche in die Fokusebene (10) des Mikroskops legen.

10. Objekthaltersystem nach Anspruch 9, dadurch gekennzeichnet, daß die Gabelöffnung größer als der hindurchragende Teil (45) der Auflicht-Objekthalter (44, 45) ist, so daß diese auf der Gabel (48) waagerecht verschoben werden können.

11. Objekthaltersystem nach Anspruch 9, dadurch gekennzeichnet, daß die gabelförmige Aufnahme (38, 48) um die optische Achse eines mit ihr verbundenen Mikroskops drehbar gelagert ist.

12. Objekthaltersystem nach Anspruch 1—3, dadurch gekennzeichnet, daß zur Beleuchtung von Durchlicht-Objektträgern unterschiedlicher Dicke ein Kondensor (3) vorgesehen ist, der eine als objektseitiges Teil seiner Frontlinse (5) im Korrektionszustand berücksichtigte, abnehmbare Planplatte (6) besitzt, deren Stärke der Dickendifferenz der verwendeten Objektträger (1, 11) entspricht.

13. Objekthaltersystem nach Anspruch 12, dadurch gekennzeichnet, daß der Kondensor (3) mindestens teilweise oberhalb einer mit dem Mikroskop fest verbundenen, waagerechten Tisch-Platte (57) angeordnet ist, die sich in einem festgelegten Abstand (a) unterhalb der Schärfenebene (10) des Mikroskops befindet, und daß der Tisch (8) zur Aufnahme von Durchlicht-Objektträgern (1; 51; 11; 13) als ein Gleittisch (58) ausgebildet ist, dessen zur Auflage auf die Tisch-Platte (57) bestimmte Füße (56) den gleichen Abstand (a) von der Anlagekante (15, 55) für die Objektträger (1; 51; 11; 13) besitzen.

**Claims**

1. A specimen-holder system for upright microscopes having a stage which has a surface, directyl correlated with the focal plane of the microscope, for applying of specimen holders, characterized by the fact that for each series of specimens (1, 11, 21, 25, 31, 41, 46, 51) of different dimensions there are provided special specimen holders (13; 20; 23; 29; 30; 32; 44,45), fitting with the same receiver (8; 18; 28; 38; 48; 54) in the stage (58; 98), in which holders the specimen surfaces always have the same effective distance (0, a) from the resting surface of the specimen holder, said distance corresponding to the distance of the focal plane (10) of the microscope from the resting surface (15, 49, 55) of the receiver.

2. A specimen-holder system according to claim 1, characterized by a receiver (8, 18, 54) which is connected with the stage and has a lower edge (15, 55), located in the focal plane (10) of the microscope, for the optional application of standard transmitted-light specimen slides (1) and holders (13) for blood-count chambers (11) into which the chambers (11) are so cemented that the object plane coincides with the upper edge of the holder (13), with due consideration of the larger cover-glass thickness (12) of the chambers (11) as compared with standard specimen slides (1).

3. A specimen-holder system according to claim 2, characterized by an insertion frame (17) for standard transmitted-light specimen slides (1) and holders (13) for blood-count chambers (11) which frame is held in the receiver (18) for displacement along the resting edge (15), and characterized by spring means (19) which urge the frame (17), upon its insertion into the receiver (18), in the direction toward the lower edge (15) so that the inserted surface of the specimen slide (1) which extends beyond the upper edge of the frame (17) comes to rest against said lower edge (15).

4. A specimen-holder system according to claim 1, characterized by the fact that as specimen holders for different series of specimens (21, 25) which are of different thickness but have precisely true dimensions within the series, there are provided a plurality of slide frames (20, 23) the depth of which is adapted in each case to the standard thicknesses of the series.

5. A specimen-holder system according to claim 4, characterized by slide frames (30) with reception containers (29) the bottoms of which are vertically adjustable by frictional engagement.

6. A specimen-holder system according to claim 5, characterized by the fact that the reception containers (29) contain non-elastic material (27) for the pressing-in of reflected-light specimens (31).

7. A specimen-holder system according to claim 4, characterized by an additional reception container (32) for reflected-light specimens which is oben on one side and in which the specimen (41) is pressed by spring force (36) against the lower edge of a diaphragm (34) the distance of which from the stage-resting surface of the container (32) corresponds to the difference between the depth of the slide frames (20, 23) and the thickness of the specimens (21, 25) held therein.

8. A specimen-holder system according to claim 4—7, characterized by the fact that for specimen holders (20, 23 30, 32) the stage has a receiver (28) in the form of a fork which is oben on one side and that spring means are provided which upon the pushing of the specimen holder (20, 23, 32, 30) into a groove (24) which forms the resting surface (15) of the receiver (28) press the holder (20, 23, 30, 32) against said surface (15).

9. A specimen-holder system according to claim 1, characterized by a fork-shaped stage (48, 38) whose surface (49) lies below the focal plane (10) of the microscope and by specimen holders (40, 45) for reflected-light specimens (46), which holders are adapted to be placed directly on the fork-shaped stage (38, 48), and place the surface of the specimen into the focal plane (10) of the microscope.

10. A specimen-holder system according to claim 9, characterized by the fact that the fork opening is larger than the part (45) of the reflected light specimen holders (44, 45) which extends through same so that said holders can be displaced horizontally on the fork (48).

11. A specimen-holder system according to claim 9, characterized by the fact that the fork-shaped stage (38, 48) is supported for rotation around the optical axis of the associated microscope.

12. A specimen-holder system according to claims 1—3, characterized by the fact that for the illuminating of transmitted-light specimen slides of different thickness, a condenser (3) is provided comprising a removable plane-parallel plate (6) which is considered as an object-side part of the front lens (5) in the correction condition, and whose thickness corresponds to the difference in thickness between the specimen slides (1, 11) used.

13. A specimen-holder system according to claim 12, characterized by the fact that the condenser (3) is arranged, at least in part, above a horizontal stage plate (57) which is firmly connected to the microscope and is located at a fixed distance (a) below the focal plane (10) of the microscope, and that, in order to receive the transmitted-light specimen slides (1; 51; 11, 13) the stage 8 is developed as a gliding stage (58) whose feet (56), intended for resting on the stage plate (57), are at the same distance (a) from the resting edge (15, 55) for the specimen slides (1; 51; 11, 13).

## Revendications

1. Système porte-objet pour microscopes droits avec une platine, possédant une face, directement corrélée au plan focal du microscope, destinée à la mise en place de porte-objets, caractérisé en ce qu'il est prévu, pour chaque série d'échantillins (1, 11, 21, 25, 31, 41, 46, 51) de dimensions différentes, des porte-objets spéciaux (13, 20, 23, 29, 30, 32, 44, 45), adaptés dans le même logement (8, 18, 28, 38, 48, 54) aménagé dans la platine, porte-objets dans lesquels la distance effective (0, a) entre la surface des échantillons et la face d'appui des porte-objets est toujours constante et correspond à la distance entre le plan focal (10) du microscope et la face d'appui (15, 49, 55).

2. Système porte-objet selon la revendication 1, caractérisé en ce qu'il possède un logement (8, 18, 54), relié à la platine, logement possédant un bord inférieur (15, 55), se trouvant dans le plan focal (10) du microscope, et destiné à assurer l'appui, facultatif, de porte-objets standard (1) pour éclairage par transmission, ainsi que des supports (13) pour chambres de numération globulaire (11), dans lesquels les chambres (11) sont insérées de telle sorte que le plan de l'objet coïncide avec le bord supérieur du support (13), en tenant compte de l'épaisseur de la lame couvre-objet des chambres (11), qui est plus grande que celle des porte-objets standard (1).

3. Système porte-objet selon la revendication 2, caractérisé en ce qu'il possède un cadre d'insertion (17) du porteobjet standard (1) pour éclairage par transmission, cadre fixé dans le logement (18) de façon à pouvoir se déplacer le long de l'arête d'appui (15), et un support (13) de chambres (11) de numération globulaire, ainsi que des moyens élastiques (19), qui appuient sur le cadre (17) lors de sa mise en place dans le logement (18) dans la direction de l'arête inférieure (15), de telle sorte que la surface du porte-objet (1), ainsi insérée et dépassant de l'arête supérieure du cadre (17), entre en contact avec cette arête (15).

4. Système porte-objet selon la revendication 1, caractérisé en ce qu'il est prévu, en tant que porte-objet pour différentes séries d'objets (21, 25), de différentes épaisseurs et présentant des dimensions constantes à l'intérieur de la série, plusieurs cadres coulissants (20, 23) dont la profondeur est dans chaque cas adaptée à l'épaisseur normale de la série.

5. Système porte-objet selon la revendication 4, caractérisé en ce qu'il possède des cadres coulissant (30) avec des récipients-logements (29) dont le fond est réglable en hauteur par frottement.

6. Système porte-objet selon la revendication 5, caractérisé en ce que les récipients-logements (29) contiennent un matériau non-élastique (27) pour permettre l'enfoncement d'objets (31) pour éclairage en lumière réfléchie.

7. Système porte-objet selon la revendication 4, caractérisé en ce qu'il possède un récipient-logement supplémentaire (32), ouvert d'un côté, destiné à recevoir des objets pour éclairage en lumière par réflexion, récipient dans lequel l'objet (41) est enfoncé sous l'effet d'une force élastique (36) contre le bord inférieur d'un diaphragme (34), dont la distance à la surface d'appui de la platine du récipient (32) correspond à la différence entre la profondeur du cadre coulissant (20, 23) et l'épaisseur des objectifs qui y sont placés (21, 25).

8. Système porte-objet selon l'une quelconque des revendications 4 à 7, caractérisé en ce que la platine possède un logement (28) destiné aux porte-objets (20, 23, 30, 32) se présentant sous la forme d'une fourche ouverte d'un côté, et qu'il est prévu des moyens élastiques qui, lors de l'enfoncement du porte-objet (20, 23, 32, 30) dans une rainure (24) formant la face d'appui (15) du logement (28), appuient le support (20, 23, 30, 32) contre cette face (15).

9. Système porte-objet selon la revendication 1, caractérisé en ce qu'il possède un logement (48, 38) en forme de fourche, dont la surface (49) se trouve en-dessous du plan focal (10) du microscope et, directement sur le logement (38, 48) en forme de fourche, des porte-objets (44, 45), destinés à être mis en place sur ce logement, pour échantillons pour lumière réfléchie (46), porte-objets qui placent la surface de l'échantillon dans le plan focal (10) du microscope.

10. Système porte-objet selon la revendication 9, caractérisé en ce que l'ouverture de la fourche est supérieure à la partie traversante (45) des porte-objets (44, 45) pour lumière réfléchie, de façon que ces derniers puissent être décalés horizontalement sur la fourche (48).

11. Système porte-objet selon la revendication 9, caractérisé en ce que le logement en forme de fourche (38, 48) est disposé de façon à pouvoir tourner autour de l'axe optique d'un microscope auquel il est relié.

12. Système porte-objet selon l'une quelconque des revendications 1 à 3, caractérisé en ce qu'il est prévu, pour l'éclairage de porte-objets pour éclairage en lumière transmise, de différentes épaisseurs, un condenseur (3) possédant une plaque plane (6), amovible, considérée à l'état correction comme la partie côté objet de sa lentille frontale (5), plaque dont l'épaisseur correspond à la différence d'épaisseur entre les porte-objets (1, 11) utilisés.

13. Système porte-objet selon la revendication 12, caractérisé en ce que le condenseur (3) est disposé, auf moins en partie, au-dessus d'une table horizontale (57), fixée à demeure au microscope, table se trouvant à une distance prédéterminée (a) en-dessous du plan focal (10) du microscope, et en ce que le plateau (8) destiné à recevoir les porte-objets (1, 51, 11, 13) pour éclairage en lumière transmise est conçue comme une platine glissante (58), dont les pieds (56), destinés à s'appuyer sur la table (57), sont à la même distance (a) de l'arête d'appui (15, 55) destinée aux porteobjets (1, 51, 11, 13).

Fig.1

Fig.2

Fig.3

# Fig.4

28 24 20 21 22 15 10

# Fig.5

15 26 28 24 23 25 10

15 31 30 10 24 28 29 27

# Fig.6

35 34 41 15 10 24 37 28

33 36 32 40

# Fig.7

# Fig. 8

# Fig. 9